# EUROPEAN PATENT APPLICATION

(11) **EP 1 086 936 A2**
(43) Date of publication of application: **28.03.2001**
(21) Application number: 00308331.8
(22) Date of filing: 22.09.2000
(51) Int. Cl.: C04B 35/80, C04B 35/111, B22D 41/02, C22B 21/00

(54) **Ceramic composites and use thereof as lining materials**

(30) Priority: 22.09.1999 JP 26866099
(71) Applicant: NICHIAS CORPORATION, Tokyo (JP)
(72) Inventor: Madono, Hideaki, Naka-ku, Hiroshima-shi, Hiroshima-ken (JP); Takagi, Keigo, Minato-ku, Tokyo (JP); Kido, Akira, Minato-ku, Tokyo (JP); Shibasaki, Akio, Minato-ku, Tokyo (JP)
(74) Representative: Allard, Susan Joyce

(57) **Abstract**

A ceramic composite having a highly heat shock resistivity, resistivity for rapid heating and rapid quenching, high strength, high heat resistance and can easily formability and workability and burner tile use thereof are produced. So as to the ceramic composite, it is formed by a matrix containing aluminum salts and/or an alumina-silica, and a reinforcement of a heat resistance long-fiber.

## Description

This invention relates to ceramic composites that have a large heat shock resistance, and are tolerant to rapid temperature changes (quenching) and have a large strength and heat resistance for use in, for example, combustion chamber, a burner tile or brazier box.

This invention also relates to a lining material composed of a ceramic composite used for aluminium casting equipment. In particular the present invention relates to materials for a lining member for treating, for example, molten aluminium, such as, for example, a stoke, ladle, tub, crucible.

Heretofore, a strongly heated portion such as a burner combustion chamber, a burner tile, or a brazier box is typically formed from SiC, Si₃N₄, ZrO₂, Al₂O₃, MgO, or mullite. However, these ceramic materials not only are relatively heavy and have a large heat capacity, but they also have a tendency to fracture or break when they are subjected to rapid temperature changes. This is because they have a relatively low thermal shock resistance. These ceramic materials are also difficult to form and work, particularly for complicated shapes.

In the stoke and ladle used in aluminium casting, a portion thereof which contacts with molten aluminium is conventionally made of cast iron and a silicon nitride ceramic moulded in a body. To save on melting loss of these materials, it is known to coat the surface of these materials with, for example, a boron nitride (BN) ceramic.

Cast iron exhibits a large melting loss so that it needs to be replaced frequently. To save on melting loss of these materials, it is known to coat the cast iron surface of these materials with, for example, a boron nitride (BN) ceramic. However, a problem arises owing to the difference in thermal expansion coefficients of the cast iron and the coating. As a result, there are problems associated with increased maintenance.

On the other hand, though silicon nitride is superior with respect to resistance to molten aluminium, there are problems when it needs to be produced in a complicated form, which results in high processing costs. Additionally, the ceramic material has a relatively poor heat shock resistance.

Furthermore, it is important not to decrease the temperature of the molten metal and hence the stroke(s) is/are often heated. However, when the stokes are made of cast iron, the stokes themselves are damaged by the heating process.

An object of the present invention is to address the problems of the prior art and to provide a ceramic composite having a high thermal shock resistance (i.e. a resistance to rapid heating and quenching), high strength, high heat resistance, a small heat capacity, and good energy deficiency when heated or quenched, good formability. The ceramic is also easy to process in an environmentally friendly manner.

An another object of the present invention is to provide a heat resistant member comprising the ceramic composite and, in particular, a lining material which has a high durability with respect to molten aluminium.

The present invention relates to a ceramic composite comprising an integrated structure wherein the matrix component of the ceramic composite contains an aluminium salt, and a reinforcing material composed of heat resistance long fiber consisting a alumina component, the matrix and the reinforcing material is adhered to each other.

The heat resistance long-fiber is Al₂O₃ component contained 60 wt % or more, and is alumina long-fiber which size is 5 to 20 µm more preferably, is 7 to 12 µm.

The fiber form is a woven fabric cloth or non woven fabric cloth is preferably for obtaining a function of reinforcing material. Concretely, woven fabric cloth is for example, cloth, tape, ribbon, cylindrically braided sleeve, or mat of chopped strand cut the string like fiber.

Another component of Al₂O₃ included in thermal resistance long fiber, SiO₂, B₂O₃ or the like may be used. Specifically, amount of B₂O₃ is used for strength of thermal resistivity long fiber increasing strength in high temperature.

Matrix is obtained in general to preparing thermal resistance powder and aluminum salt. Aluminum salt can use combination of aluminum as a base, and an acid. In aluminum salt, it can use one or more, selected by aluminum phosphate, aluminum lactate, aluminum chloride and aluminum acetate.

In these materials, aluminum phosphate and aluminum lactate are preferably used for high reproducibility and remarkable effect of the present invention to be obtained.

As thermal resistivity powder, the powder is preferably non-basic particle having a substantially mean size is 10 µm or less and melting point is 1500°C or more.

The non-basic particle means substantially not including a metal showing a basic, such as alkaline metal, alkaline earth metal. This condition is important for thermal resistivity powder do not obstruct to react aluminum salt with alumina component or the same.

In thermal resistivity powder beforementioned, almina, aluminum hydroxide, silica sand, mullite, aluminum borate, high alumineous chamotte or the like are preferred.

When mean size of these thermal resistivity powder is substantially 10 µm or more, obtained matrix material cracks easily and tend to decreasing strength of reinforcing material. So it is not preferred.

Ceramic composites of the present invention may multi-layered structure which constitute united layer consisting matrix and reinforcing material. By doing this, ceramic composites having increasing strength is obtained. Thickness of the ceramic composite may set up from thin to thick easily. This multi layered structure is obtained as coating a matrix material on cloth comprising thermal resistivity long fiber, then it piles up repeatedly.

### BRIEF DESCRIPTION OF THE DRAWINGS

The objects and features of the present invention will become more apparent from the consideration of the following detailed description taken in conjunction with the accompanying drawings, in which:
Fig. 1 shows a cross eyed view of the example of a ceramic composite structural configuration for a burner combustion chamber according to the present invention;
Fig. 2 shows a cross eyed view of the example of a ceramic composite configuration for a burner combustion chamber installing a heat resistance board according to the present invention; and
Fig. 3 is a cross sectional view showing another example of a ceramic composite for a stokes according to the present invention.

### Summary of the Invention

Next, the present invention is ;
member lined on a surface portion contacting with an molten aluminum,
a member constituted comprising a cloth composed of an alumina silica long fiber containing a mullite component is 80 wt % or more, and a matrix prepared in an alumina silica in main component.

Alumina silica fiber preferably contains mullite component in 80 % or more by weight (80 wt %). It is necessary to rise up integrating a composite material in order to mullite component yielding in matrix rising up to common the fiber.

Alumina silica fiber of the present invention is defined as consisting of alumina component and silica component or mainly composed of these materials.

"A mullite component is contained more than 80 wt %" is difined as material on state using as thermal resistivity material in actual, or defined as alumina silica fiber mullite component is yielded by baked or utilized as a thermal resistance material in high temperature atmosphere and amount of the mullite component is 80 wt % or more.

That is, in the present invention it is important to contain mullite component as a thermal resistant material in actual.

In this condition before baking or no exposing in high temperature, though alumina components and silica components is contained in predetermined amount, there is no mullite nature or no evidence mullite component ratio calculated by containing a alumina component and silica component.

That is, though materials which should be yielded in mullite component is contained, by observing crystalline structure of x-ray diffraction there exists alumina silica fiber which is no observed peak of mullite component or is weaker than supposing that of estimation.

In the fiber, it is because of almina component and silica component is not constitution of crystalline structure allowed mullite component, and it exists only mixed state (state which almina component and silica component is not contributed in yielding a mullite component).

In the fiber before-mentioned, only a predetermined blending, it yields a mullite component consisting their blending ratio by exposing the blending more than 1000 °C. That is, after baking or in working condition, mullite is yielded.

In the state of the mullite yielded by the above-mentioned almina silica fiber, the amount of mullite is 80 % or more, it may be contained in the present invention as "Containing a mullite component more than 80 % by weight".

Matrix preparing almina silica is in main component, in blending as a essential component such as ;
1) alumina sol binder,
2) alumina particle and silica particle, almina particle and mullite particle, alumina particle silica particle and mullite particle, silica particle and mullite particle or mullite particle.

In these combinations, almina particle and silica particle combination is preferred. In the combination, yielded ceramic composite(s) has a most thermal resistance and strength. In general trend, by using mullite component in blending process, the strength of product is decreased.

In combination with alumina particle and silica particle, it is because mullite component is yielded when it is baked. By doing this, it reveals cooperating of fiber which becomes skeleton structure in matrix and mullite component, and consequently rigid structure is obtained for the matrix capturing the fiber tightly.

On the other hand, mullite particle is premixed before baking, creating mullite component does not increase easily. Above-mentioned function is failed to, and as a result, ceramic composite decreases strength (Mullite particle is stability and creation of mullite reaction progress hardly, for that reason minuteness of matrix is failed).

Filler containing matrix may be used independently or in combination to, other than particle, fiber or short fiber. However, the filler size and mixing ratio may set up so as to disperse in the matrix uniformly or permeate in fiber consisting matrix skeleton structure.

In working condition after baking, amount of mullite component in matrix is preferably 40 wt % or more. This is necessitated for obtain to cooperation of materials mixed of alumina silica fiber in skeleton structure with matrix material.

Another constitution of the present invention, ceramic composite materials lined on a surface of a member treating a molten aluminum, the ceramic composite materials constructed in a skeleton structure composed of thermal resistivity long fiber and matrix including aluminum salt is the gist.

In the above structure, the skeleton structure consist of thermal resistivity long fiber is preferably cloth consist of alumina silica long fiber including mullite component is 80 wt % or more.

In an aluminum salt, the salt material is used singly or in combination of two or more kinds selected from aluminum phosphate, basic aluminum lactate, basic aluminum chloride and basic aluminum acetate.

Matrix is constituted by thermal resistivity particle such as alumina, silica or the like (or fiber or short cut fiber) and aluminum salt.

In ceramic composites of the present invention, the skeleton structure is occupied in 6 to 30 wt % and the matrix is occupied 70 to 94 wt % is preferred. When occupation ratio of skeleton structure is less than 6 wt %, the obtained ceramic composite has a weak strength. When occupation ratio of the skeleton structure is more than 30 wt %, it is not preferred so that the obtained ceramic composite gets a presence of matrix sparseness partly or has a decreasing strength locally, or raises up destruction locally in ease.

Another aspect of the present invention, ceramic composite material used as lined on a surface of molten aluminum handling member, the material is main component as a continuous fiber, filler consisting a metal oxide powder and binder. And more than 90 wt % of constituent materials is occupied material setting up a metal oxide by heating.

Furthermore, the gist of the present invention is that as the continuous fiber set up metal oxide, crystalline continuous long fiber or non crystalline continuous fiber selected by mulliteous, aluminaous, alumina silicaous, silicaous is used and as a metal oxide powder, mullite powder, alumina powder, silica powder is used.

Furthermore, the gist of the present invention is that aluminum salt as a binder. Any further, the gist of the present invention is that a materials may be used in a range of 10 wt % or less, selected by boron nitride, barium sulphate, aluminum borate, talc or the like or mineral of hydrous silica clay.

Boron nitride and barium sulphate may improve the effect of wettability of a molten aluminum of ceramic composite (it decrease a wettability of ceramic composite). Furthermore, by blending in raw material constituting a matrix, it may improve of wettability for molten aluminum of ceramic composite.

By using a metal oxide or setting up a metal oxide by heating, it is obtained that high resistivity for molten aluminum. Especially, it is important to consist of metal oxide mostly skeleton structure setting up a continuous fiber.

And it is important to that filler constituting a matrix with binder also is metal oxide. As a binder, metal oxide changed by heating as a given generic term by aluminum salt, or form of a metal oxide used as an alumina sol or the same, may be used. There is no doubt that both of two kinds may be used by mixing.

### EMBODIMENTS OF THE INVENTION

### Embodyment1

This is showing a case that is used aluminum phosphate as aluminum salt in matrix.

It is preferred that molar ratio is 1:2 to 1:4 as an aluminum phosphate. When molar ratio of Al₂O₃ and P₂O₅ is less than 1:4, then viscosity of matrix is too high and processing of ceramic composite is difficult.

To obtain ceramic composite of the invention, first, starting raw material paste is prepared to mix thermal resistivity powder and aluminum phosphate. Preparation in amount of the thermal resistivity powder and the aluminum phosphate may suitably select. However, it is preferred that amount of aluminum phosphate is 6 to 30 wt % opposite to the thermal resistivity powder.

When blending ratio opposite to the thermal resistivity is 6 wt % or less, then obtained ceramic composite has poor strength, and when the ratio is more than 30 wt %, then shrinkage is too large when it is heated. Both of them, it is not preferable.

Aforesaid paste mixture is prepared adding water or thickener, if necessity. As the thickener, polyacrylamide is preferable. When the paste mixture of starting raw material is obtained, then it is coated on the cloth and to obtain a form. The form is dried and baked. As a result, ceramic composite is obtained. The process by machinery is after drying the paste or ceramic composite after baking, using a scissors, a grail or drill or the like.

Thermal resistivity long fiber is the nucleus of skeleton structure that is ceramic composite of the present invention. It is preferred that the fiber is amount of 6 to 30 wt % of the ceramic composite. The thermal resistivity powder and aluminum phosphate is 70 to 94 wt % in total.

When an amount of the thermal resistivity long fiber in ceramic composite is 6 wt % or less, then obtained ceramic composite is poor strength and poor heat shock resistivity. When an amount of the long fiber is 30 wt % or more, then matrix component is too little to be difficult forming composite. Furthermore, matrix material between fibers is no uniformity, so that external force is not spreading composite in all when the external force is applied. As a result, the composite may be easily broken in local.

It is shown that processing a ceramic composite by baking. However, dried form is processed as thermal resistivity material such as furnace material, and it may adopt to be baking method when it is used as furnace actually. In this case, ceramic composite is not obtained when it is executed as a furnace material, and it is baked when it is used as thermal resistivity material, and it is obtained as ceramic composite.

In order to treat easily at forming, a small quantity of alkaline earth metal may add in the paste mixture. In this case, hardening of aluminum phosphate is accelerated, and the forming has a strength which may handling without drying process. Additive hardening accelerator for same object may use alumina cement, magnesium oxide and wollastonite or the like.

### Embodiment 2

This is showing a case that is used aluminum lactate as aluminum salt in a matrix.

Aluminum lactate is obtained that water soluble aluminum salt such as aluminum chloride react with carbonic acid or carbonic salt, and obtained hydrated alumina react with lactic acid. Aluminum lactate hardens by using jointly at a normal temperature with hardener such as MgO, dolomite, chromic acid, hydrated alumina. Solution of aluminum lactate shows acidity, and strength is large after hardening in comparison to silica sol or alumina sol. There is no creation of low melting point material at high temperature for impurity creating fusing agent is a little in aluminum lactate. As a result, it can obtain fireproof member in high heat resistivity. Another blending material of aluminum lactate and an amount of blending, it may adopt same material and same condition in aluminum phosphate is used.

There are some advantageous when as aluminum salt aluminum lactate which include no volatile element as aluminum phosphate (phosphate has large volatility). This point utilizes extremely in a case of ceramic composite of the present invention used as a heating furnace incurred in an existence of volatile element such as semiconductor materials. When aluminum lactate is used as aluminum salt, it may have large strength in high temperature region in comparison with using an aluminum phosphate.

The present invention will be described in detail with reference to, but not limited to, examples.

### Example 1

In alumina powder 100 g (Showa Electronics Co.Ltd. A42-2: mean particle size 3.2 µm), aluminum phosphate of Al₂O₃:P₂O₅ in molar ratio is 1:4 solution (Taki Chemicals Co,Ltd. Asidphos 75) 20g and water 30g was mixed sufficiently and was prepared as paste. The paste was painted uniformity on 22cm × 22cm size cut alumina long fiber cloth ( Nitias Co.Ltd. Lubironcloth CP-20) in ratio of 0.2 g/cm². The cloth which was painted the paste was winded in double on 32 mm diameter size of stainless pipe treated fluorine polymer coating, then dried in dryer. After drying, removing the pipe, then thin forming was prepared at an inner diameter of 32 mm, 0.9 mm in thickness and 2.0 g/cm³ in density. Ceramic composite was produced by baking the forming at 1200 °C in 1 hour.

The ceramic composite was produced no crack though performed testing repeatedly 10 times that rapid heating and rapid quenching test that rapid heating process maintaining 20 min. in a furnace heated at 1200 °C, and rapid quenching process by air-quenching rejecting from the furnace. Thermal shrinkage of direction to length of the ceramic composite was 0.8 % that was extremely small after heating at 1500 °C in high temperature in 3 hours.

### Example 2

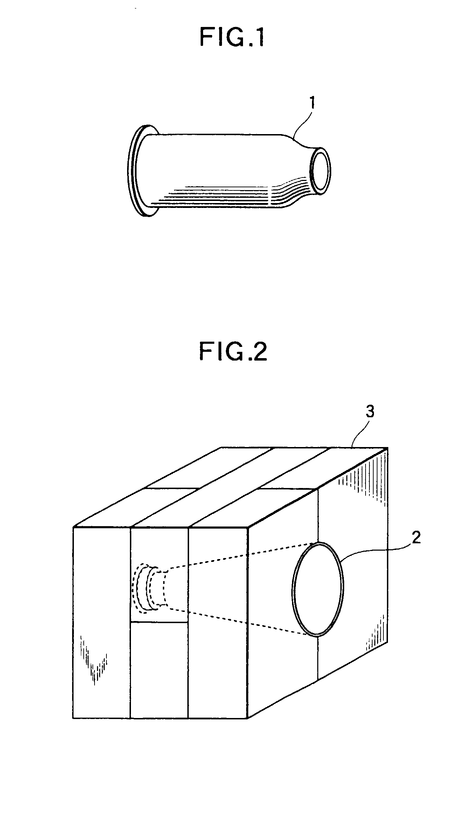

In alumina powder 200 g (Showa Electronics Co.Ltd. A43-M: mean particle size 0.8 µm), solution of aluminum phosphate of Al₂O₃:P₂O₅ in molar ratio is 1:4 30 g (Tagi Chemicals Co,Ltd. Asidophos 75), polyacrylate ester liquid resin 30 g (Showa Polychemicals Co. Ltd. Cogum HW-62) and water 30g was mixed sufficiently and was prepared as paste. The paste was painted uniformity on 2 pieces of 35 cm×35 cm size cut alumina long fiber cloth (Nitias Co.Ltd. Lubironcloth CP-20) in ratio of 0.2 g/cm². The cloth which was painted the paste was winded in double on 32 mm diameter size of stainless pipe treated fluorine polymer coating, then dried in dryer. After drying, removing the pipe, then baking, it was produced as burner combustion chamber 1 as shown by Fig.1. Obtained burner tile had 0.9 mm in thickness and density of 2.0 g/cm³.

It was set up as combustion chamber of high speed burner made of ceramic composite, and testing was performed in combustion gas flow rate of 100 m/s or more, repeatedly 10 times by combustion and fire extinguishing. However, no crack or no breakage was produced. The ceramic composite may produce that forming after drying process is setting up furnace as burner tile, then baking by using the forming as burner tile and the forming is performed as ceramic composite.

### Example 3

In alumina powder 200 g (Showa Electronics Co.Ltd. A42-2: mean particle size 3.2 µm), solution of aluminum phosphate of Al₂O₃:P₂O₅ in molar ratio is 1:3 (Tagi Chemicals Co,Ltd. aluminum primary phosphate) 40 g and polyacrylate ester liquid resin (Showa Polychemicals Co. Ltd. HW-62) 15 g and water 10 g was mixed sufficiently and was prepared as paste. The paste was painted uniformity on 22cm × 22cm size cut alumina long fiber cloth (Nitias Co.Ltd. Lubironcloth CS-40) in ratio of 0.3 g/cm². The cloth which was painted the paste was winded in double on 32 mm diameter size of stainless pipe treated fluorine polymer coating, then dried in dryer. After drying, removing the pipe, then baking the cloth and was processed ceramic composite at inner diameter of 32 mm, 1.2 mm in thickness and density of 2.2 g/cm³.

The ceramic composite was produced no crack though performed testing repeatedly 10 times that rapid heating and rapid quenching test that rapid heating process maintaining 20 min. in a furnace heated at 1200 °C, and rapid quenching process by air-quenching rejecting from the furnace. Thermal shrinkage of direction to length of the ceramic composite was 0.8 % that was extremely small after heating at 1500 °C in high temperature in 3 hours.

### Example 4

In alumina powder 196 g (Showa Electronics Co.Ltd. A42-2: mean particle size 3.2 µm) and heat resistance cement 4 g (Electricchemicals Co. Ltd. High Heat Resistance Long Cement Super), aluminum phosphate of Al₂O₃:P₂O₅ in molar ratio is 1:3 solution (Tagi Chemicals Co,Ltd. aluminum primary phosphate) 30g and polyacrylate ester liquid resin (HW-62) 15 g and 10 wt % of ortho phosphoric acid 15 g was mixed sufficiently and was prepared as paste. The paste was painted uniformity on alumina long fiber cloth ( Nitias Co.Ltd. Lubironcloth CP-20) in ratio of 0.15 g/cm². The cloth which was painted the paste was 4th winded on 32 mm diameter size of stainless pipe treated fluorine polymer coating, then dried in dryer. After drying, removing the pipe, then thin forming was baked, resultantly, as shown by Fig. 2 having 1.5 mm in thickness and density of 1.8 g/cm³ as thin burner combustion chamber 2 was processed.

Ceramic fire board 3 as shown by Fig. 2 surrounding of the burner combustion chamber 2 was set up and it was used in a furnace at inner temperature 1550 °C in 1 month as burner tile. However, no cracks or no breakage was produced.

### Example 5

In alumina powder 100 g (Showa Electronics Co.Ltd. A42-2: mean particle size 3.2 µm), solution of aluminum phosphate of Al₂O₃:P₂O₅ in molar ratio is 1:3 40 g (Tagi Chemicals Co,Ltd. aluminum primary phosphate 100L), polyacrylate ester liquid resin (HW-62) 10 g and ortho phosphoric acid 20 g was mixed sufficiently and was prepared as paste. The paste was painted uniformity on alumina long fiber cloth (Nitias Co.Ltd. Lubironcloth CP-20) in ratio of 0.15 g/cm². The cloth which was painted the paste was winded in double on 32 mm diameter size of stainless pipe treated fluorine polymer coating, then dried in dryer. After drying, removing the pipe, then baking was performed and thin ceramic composite was prepared at a inner diameter 32 mm, 1.0 mm in thickness and density of 1.8 g/cm³. The ceramic composite was produced no crack though performed testing repeatedly 10 times that rapid heating and rapid quenching test that rapid heating process maintaining 20 min. in a furnace heated at 1200 °C, and rapid quenching process air-quenching rejecting from the furnace. Thermal shrinkage of direction to length of the ceramic composite was 0.8 % that was extremely small after heating at 1500 °C in high temperature in 3 hours.

### Example 6

In mullite powder 200 g (Taiheiyo Random Co. Ltd.: mean particle size 7.5 µm), solution of aluminum phosphate of Al₂O₃:P₂O₅ in molar ratio is 1:4 solution 30 g (Tagi Chemicals Co,Ltd. Asidophos 75), polyacrylate ester liquid resin (HW-62) 10 g and ortho phosphoric acid 20 g was mixed sufficiently and was prepared as paste. The paste was painted uniformity on alumina long fiber cloth ( Nitias Co.Ltd. Lubironcloth CP-20) in ratio of 0.2 g/cm². The cloth which was painted the paste was winded in double on 32 mm diameter size of stainless pipe treated fluorine polymer coating, then dried in dryer. After drying, removing the pipe, then baking was performed and thin ceramic composite was prepared at a inner diameter 32 mm, 0.8 mm in thickness and 2.0 g/cm³.

The ceramic composite was produced no crack though performed testing repeatedly 10 times that rapid heating and rapid quenching test that rapid heating process maintaining 20 min. in a furnace heated at 1200 °C, and rapid quenching process air-quenching rejecting from the furnace. Thermal shrinkage of direction to length of the ceramic composite was 0.8 % that was extremely small after heating at 1500 °C in high temperature in 3 hours.

### Example 7

In this example, it is shown the case that aluminum lactate is used. Blending of matrix is as below.
Alumina powder: 100 parts by weight
aluminum lactate: 15 parts by weight
thickener: 15 parts by weight
water: 20 parts by weight

Alumina powder (Showa Electronics Co.Ltd. A42-2), aluminum lactate ( Tagi Chemicals Co,Ltd. #2500F) and Showa Polymer Co. Ltd. Cogam HW-62 as thickener and was used. First the above-mentioned materials were mixed and were prepared as paste. The paste was painted uniformity on alumina long fiber cloth (Nitias Co.Ltd. Lubironcloth CP-20) in ratio of 0.2 g/cm². The cloth which was painted the paste was winded in double on 32 mm diameter size of stainless pipe treated fluorine polymer coating, then dried in dryer. After drying, removing the pipe, then thin forming was prepared at an inner diameter 32 mm, 1.1 mm in thickness and 1.8 g/cm³. Ceramic composite was produced by baking the forming at 1200 °C in one hour.

### Embodiment 3

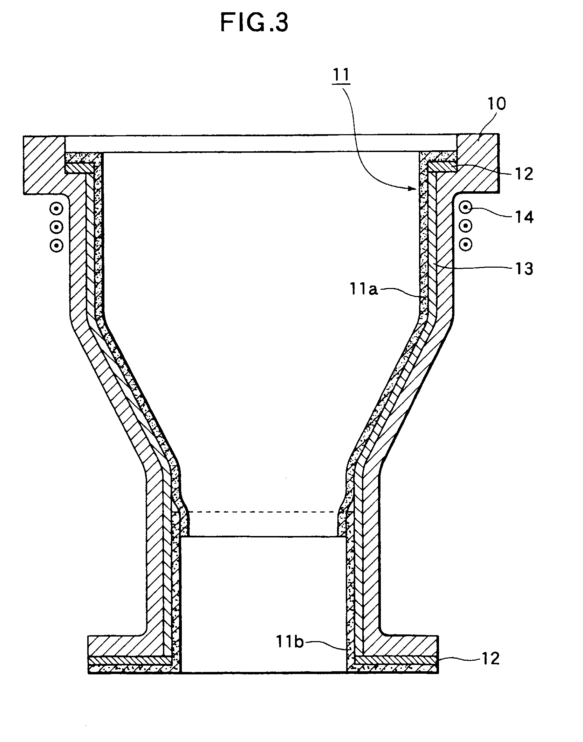

Fig.3 shows preferred embodiment of the present invention. Shown by Fig. 3, in stokes for molten aluminum bath, lining of the ceramic composite material 11 was constituted and set up inner surface. Between the metal construction 10 and the lining of the ceramic composite material 11, ceramic paper 12 and metal mesh 13 is set up.

Metal construction 10 is utilizing a cheap cast iron or stainless, or ceramic material.

In the present invention, member such as stoke, treating a molten aluminum for no contacting directly molten aluminum may select material in broad range.

Drawing number 14 is resistance heater. The heater heats stoke from outside and in order not to decrease temperature of molten aluminum in stokes. As heating means, other than resistance heater, inducing heater by inducing stoke by induced current, and heating directly by flame.

In this, metal constitution 10 is formed in stokes configuration. Ceramic composite material 11 operates as lining layer.

Ceramic paper 12 and metal mesh 13 work as buffer material between metal constitution 10 and ceramic composite.

The buffer material has to allow expansion of metal constitution 10 forming by heat of molten bath.

As ceramic composite 11 which is lining layer for molten aluminum bath, 2 kinds are utilizable as below;

### 1) first matrix material

Cloth composed of alumina silica long fiber containing mullite component 80 wt % or more is adopted, filler as particle contained alumina silica for main component as matrix, and alumina sol as inorganic binder.

### 2) second matrix material

skeleton structure composed of thermal resistivity long fiber and matrix containing aluminum salt.

Processing method of lining layer comprised ceramic composite material shows outlined as below. First, example of processing method 1) shows. In this case, alumina particle and silica particle are used as filler material, and alumina sol is used as inorganic binder. Furthermore, organic binder may be used,

The above mentioned materials is mixed and start material of pasty matrix is obtained. The pasty start material is coated continuous fiber woven alumina silica fiber composed of mullite component is more than 80 wt %, preferably more than 90 wt %. Then dried and baked is performed and ceramic composite material is obtained. In this case, the continuous fiber becomes skeleton structure.

In general, by the above elementally structure is adopted multilayer structure, it may obtain lining material of necessity thickness.

The cloth becoming skeleton structure is adopted to non woven cloth in addition to woven cloth. Next, processing method aforementioned 2) shows. In this case, the skeleton structure is the same as 1), alumina particle and silica particle filler as matrix and aluminum phosphate or aluminum lactate as inorganic binder. Processing method of ceramic composite material is same as 1).

### Example 8

Fig. 3 shows a sectional view of stokes which lining for molten aluminum set up inner surface. In fig. 3, by metal construction 10 obtained stainless casting, outline of stokes and constitution of stokes is formed.

Inner surface of the stokes, 1.5 mm in thickness of ceramic composite material 11 which ceramic fiber containing silica and alumina components 50 wt % respectively, is combined with binder, is arranged through ceramic paper 12 and metal mesh 13. Outside of stokes, resistance heater 14 is arranged.

Processing method of the ceramic composite material 11 aforementioned shows below. First, cloth (Nitias Co. Ltd. CP-20) as continuous fiber is prepared containing alumina 68 wt %, silica 27 wt %, borate 5wt% as skeleton structure, and when it is used, mullite component is 94 wt % or more.

Next, starting row material of paste like matrix is painted the cloth in density of 1500 g/cm³.

| | |
|---|---|
| alumina particle: mean particle size 5 µm (Showa Electrics Co. Ltd. A-42-2) | 56 wt % |
| alumina particle: mean particle size 1 µm (Showa Electrics Co. Ltd. AL160-SG-3) | 15 wt % |
| silica powder: mean particle size 1 µm (Horyu Chemicals Co. Ltd. "H") | 4 wt % |
| alumina sol: (Nissan chemicals Co. Ltd. AS 520) | 25 wt % |
| organic acid: (90 % reagent) | 0.5 wt % (most contained) |
| organic binder (5 % solution) | 4 wt % (most contained) |

It is applied to pre-treat separating to alumina silica fiber and binding agent which binds the silica alumina fiber constituting a cloth, and the fiber gets untied. By treating of this, starting material of matrix impregnates sufficiently in the fiber, resultant obtained ceramic composite material is minute, and has high strength.

Aforesaid the starting material of matrix is painted the cloth at density of 1500 g/cm². On this occasion, pressing the cloth to mold adopting stoke inner shape, the starting material of matrix is painted. Above process is applied to be triple layered, and composite of thickness of 1.5 mm is obtained.

Aforesaid the composite is dried at 100 °C in an oven in 1 hour. Silica sol is painted inner surface of obtained construction (contacting molten aluminum bath), then the construction is dried again.

Next, the construction is baked at 1400 °C in two hours. Resultantly, ceramic composite material as shown fig. 1 having draw numbers 11a, 11b is obtained. The ceramic composite material is formed silica layer by painted silica sol to inner surface of the material, the resultant material is risen up airtightness and a strength.

Aforesaid constituting ceramic composite material is cut off 3 cm square and is dipped in molten aluminum bath at 2 months, there is no observed that changes of quality and loose of non-wettability (repelling property of molten aluminum) for molten aluminum bath. Samples of iron and stainless of 3cm square by 2 mm thickness are tested same as above mentioned, there is observed that melting loss progressed only 1 day and sample is disappeared.

Aforesaid ceramic composite material 11a and 11b is filled in stainless constitution 10 through ceramic paper 12 and stainless mesh 13. Resultantly, constitution as shown by Fig. 1 is obtained.

Because of ceramic composite material 11 shows superior resistivity for molten aluminum, stoke of this example can elongate operating time and cut down maintenance cost.

Aforesaid ceramic composite material 11 itself is thin and ceramic paper 12 is also thin thickness, for that reason, when heats by heater 14 for preventing to fall temperature of molten bath of inner stoke, heating is performed effectively. Furthermore, aforesaid ceramic composite material 11 has high resistivity, there is superiority that by heating outside of stoke, bad influence produces hardly.

### Example 9

In this example, as matrix shown by example 8, blending ratio of starting material is used below.

| | |
|---|---|
| alumina particle: mean particle size 5 µm (Showa Electrics Co. Ltd. A-421-2) | 67 wt % |
| aluminum phosphate solution (Taki Chemicals Co. Ltd. Asidophos) | 13 wt % |
| water | 20 wt % |

Aluminum phosphate solution is used that Al₂O₃:P₂O₅ in molar ratio is 1:4 . Another process is same as example 8.

The ceramic composite material 11 of this example is dipped in molten aluminum bath at two months. There is no observed that changes of quality and loose of non-wettability (repelling property of molten aluminum) for molten aluminum bath.

### Example 10

In this example, as matrix shown by example 9, blending ratio of starting material is used below.

| | |
|---|---|
| alumina particle: 5 µm (Showa Electrics Co. Ltd. A-42-2) | 67 wt % |
| aluminum lactate (Taki Chemicals Co. Ltd. #2500F) | 13 wt % |
| water | 20 wt % |
| thickener :(Showa Polychemicals Co. Ltd. Cogum HW-62) | 5 wt % |
| water | 20 wt % |

### Example 11

This example shows the constitution of examples 8 or 9, further containing, wherein a boron nitride (BN) layer setting up inner surface (surface contacting molten aluminum) of ceramic composite material. Resultantly, it may be more weak wettability of molten aluminum and more increase to resistivity for molten aluminum.

If boron nitride layer separates the ceramic composite material, substrate ceramic composite material has resistivity for molten aluminum, there is no matter of especial importance.

By adding in BN matrix, it may heighten resistivity for molten aluminum of the ceramic composite of this invention.

### Example 12

Following blending examples 1 to 5 were prepared, and testing were performed to dipping into molten aluminum.

| Blending example 1 | |
|---|---|
| filler :alumina powder (Showa Electrics Co. Ltd. A-42-2) | 50 parts by weight |
| alumina powder (Showa Electrics Co. Ltd. AL-160-SG-3) | 15 parts by weight |
| silica powder | 3 parts by weight |
| binder: aluminum phosphate (Taki Chemicals Co. Ltd. Asidphos 120M) | 20 parts by weight |
| binding thickener: | 2 parts by weight |

Aforesaid mixture of the blending was painted on one side of alumina cloth (Nitias Co. Ltd. Lubilon CP20) is continuous fiber cloth at density of 1000 g/m², and the cloth was 3-layered and was obtained as sample of planer shaped in thickness of 1.5 mm.

| Blending example 2 | |
|---|---|
| filler :alumina powder (Showa Electrics Co. Ltd. A-42-2) | 50 parts by weight |
| alumina powder (Showa Electrics Co. Ltd. AL-160-SG-3) | 15 parts by weight |
| silica powder | 3 parts by weight |
| binder: aluminum phosphate (Taki Chemicals Co. Ltd. Asidphos 120M) | 20 parts by weight |
| binding thickener: | 2 parts by weight |

Aforesaid mixture of the blending was painted on one side of alumina cloth (Nitias Co. Ltd. Siltex 1000M) is continuous fiber cloth at density of 1500 g/m², and the cloth was 3-layered and was obtained as sample of planer shaped in thickness of 1.5 mm.

| Blending example 3 | |
|---|---|
| filler :alumina powder (Showa Electrics Co. Ltd. A-42-2) | 50 parts by weight |
| alumina powder (Showa Electrics Co. Ltd. AL-160-SG-3) | 15 parts by weight |
| silica powder | 3 parts by weight |
| binder: aluminum phosphate (Taki Chemicals Co. Ltd. Asidphos 120M) | 20 parts by weight |
| binding thickener: | 2 parts by weight |

Aforesaid mixture of the blending was painted on one side of alumina cloth (Unitika Glassfiber Co. Ltd. H201M104F) is continuous fiber cloth at density of 1500 g/m², and the cloth was 3-layered and was obtained as sample of planer shaped in thickness of 1.5 mm.

| Blending example 4 | |
|---|---|
| filler :alumina powder (Showa Electrics Co. Ltd. A-42-2) | 50 parts by weight |
| alumina powder (Showa Electrics Co. Ltd. AL-160-SG-3) | 15 parts by weight |
| silica powder | 3 parts by weight |
| binder: aluminum phosphate (Taki Chemicals Co. Ltd. Asidphos 120M) | 25 parts by weight |
| binding thickener: | 2 parts by weight |

Aforesaid mixture of the blending was painted on one side of alumina cloth (Unitika Glassfiber Co. Ltd. H201M104F) is continuous fiber cloth at density of 1500 g/m², and the cloth was 3-layered and was obtained as sample of planer shaped in thickness of 1.5 mm.

| Blending example 5 | |
|---|---|
| filler :alumina powder (Showa Electrics Co. Ltd. A-42-2) | 50 parts by weight |
| alumina powder(Showa Electrics Co. Ltd. "AL-160-SG-3") | 15 parts by weight |
| silica powder | 3 parts by weight |
| barium sulphate (Sakai Chemical Kogyo Co. Ltd. "TH") | 6 parts by weight |
| binder:alumina sol (Nissan Chemicals Co. Ltd. "AS520") | 25 parts by weight |
| binding thickener: | 2 parts by weight |

Aforesaid mixture of the blending was painted on one side of alumina cloth (Unitika Glassfiber Co. Ltd. H201M104F) is continuous fiber cloth at density of 1500 g/m², and the cloth was 3-layered and was obtained as sample of planer shaped in thickness of 1.5 mm.

Samples of mixture composed of aforesaid composition were tested showing Table 1.

Samples of comparative example were formed in thickness of 10 mm silicic nitride plate (comparative example 1) and formed on iron plate in thickness of 1.5 mm by spraying silicic nitride (comparative example 2), respectively.

| | Example 8 | example 9 | Example 10 | example 11 | example 12 | comparative example 1 | comparative example 2 |
|---|---|---|---|---|---|---|---|
| Bending strength before heating (Mpa) | 55 | 40 | 75 | 35 | 45 | 250 | - |
| shrinkage after heating at 800°C × 24hrs. | 0 | 0 | 0.2 | 0.2 | 0.2 | - | - |
| Bending strength after heating at 800°C × 24hrs. (Mpa) | 40 | 35 | 45 | 28 | 55 | - | - |
| shrinkage after heating at 1400°C × 24hrs. | 0.5 | 1.2 | 1 | 1.9 | 2.1 | - | - |
| Bending strength after heating at 1400°C × 24hrs. (Mpa) | 30 | 28 | 24 | 35 | 26 | 200 | - |
| Wettability after dipping for 30 days | non | non | Non | non | non | non | non |
| External appearance after dipping for 30 days | normal | normal | Normal | normal | normal | erosion is occurred in part of melting bath boundary | cracked in spraying part |
| Wettability after dipping for 60 days | changing a little | changing a little | Changing a little | changing a little | non | Changing a little | wetted perfectly |
| External appearance after dipping for 60 days | normal | normal | Normal | normal | normal | Extending erosion | fused in part of melting bath boundary |

Temperature of molten aluminum is at 700 °C.

### Effect of the Invention

As has been explained above in detail, according to the present invention there is extremely utilized ceramic composite which has large heat shock resistance and resistance of rapid heat and rapid quench, and has high strength, high heat resistivity and has formability and workability in field of industrial art.

The ceramic composite may utilize as a heat resistance materials, such as liner of burner tile, wall lining of fiber furnace which has necessary combustor burner wind speed resistance, wall lining of furnace which is required dust free, turning of ceramic tube or adiabator and insulating material of high-frequency heating furnace or the like.

Especially, constitution used the ceramic composite constitution of the present invention as lining material for molten aluminum, has the following nature;
(a) highly resisting pressure for molten aluminum
(b)high non-wettability.
And it may decrease maintenance cost.

Furthermore, so the constitution is thin, it is allowed thermal conductivity to some extent, when it is utilized a stoke needed in heating, heating from outside is performed efficiently.

Furthermore, the constitution or the ceramic composite material is thin and has light weight, so that setting up and maintenance is easily performed. And the constitution or the ceramic composite material is forming and cutting process operates easily, so that complicated form is performed easily.

## Claims

**1.** A ceramic composite comprising a matrix that contains an aluminium salt and/or alumina-silica and a heat-resistant long-fiber reinforcement.

**2.** A ceramic composite as claimed in claim 1, which is composed of a united structure.

**3.** A ceramic composite as claimed in claim 1 or claim 2, wherein said aluminum salt is a combination of aluminium as a base and an acid.

**4.** A ceramic composite as claimed in any one of the preceding claims, wherein said heat-resistant long-fiber is a composition which contains at least 60% by weight of Al₂O₃.

**5.** A ceramic composite as claimed in any one of claims 1 to 4, wherein said aluminium salt is selected from one or more of aluminium phosphate, basic aluminium lactate, basic aluminium chloride and basic aluminium acetate.

**6.** A ceramic composite as claimed in any one of claims 1 to 5, wherein said heat-resistant long fiber reinforcement is a woven cloth, a stitch cylinder-like sleeve, or a chopped strand mat.

**7.** A ceramic composite as claimed in any one of claims 1 to 6, wherein layers united by matrix and reinforcement are multi-layered.

**8.** A ceramic composite as claimed in any one of claims 1 to 7, wherein said matrix contains 10 µm or less of thermal resistance powder, and the weight ratio of the heat-resistant long-fiber is in the range of from 6 to 30% by weight.

**9.** A ceramic composite as claimed in any one of claims 1 to 8, wherein said aluminium salt comprises aluminium phosphate combined with Al₂O₃ and P₂O₅ in a molar ratio of 1:2 to 1:4.

**10.** A thermal resistivity material comprising or consisting of a ceramic composite as defined in any one of claims 1 to 9.

**11.** A material lined member surface for a molten aluminium bath, wherein said material comprises or consists of a ceramic composite as defined in any one of claims 1 to 8, and wherein said reinforcement comprises a cloth made of alumina silica long fibers containing at least 80 wt % of a mullite component and said matrix is prepared using alumina silica as a main component.

**11.** A material lined member surface as claimed in claim 10, wherein said matrix prepared comprises:
i) an alumina sol binder, and wherein
ii) alumina and silica particles, alumina and mullite particles, alumina, silica and mullite particles, silica and mullite particles or mullite particles are contained as an essential constituent material.

**12.** A Material lined member surface as claimed in claim 10 or claim 11, wherein the surface of said ceramic composite is formed in silica layer.

**13.** A material lined member surface as claimed in any one of claims 10 to 12, wherein said matrix comprises at least 40 wt % of a mullite component.

**14.** A material lined member surface as claimed in any one of claims 10 to 12, wherein a member treating molten aluminium bath is constitution to be heated.

**15.** A material lined member surface for a molten aluminium bath, wherein said material comprises or consists of a ceramic composite as defined in any one of claims 1 to 8, and wherein said reinforcement material comprises a skeleton structure made of a heat resistant material, and said matrix contains an aluminium salt.

**16.** A material lined member surface as claimed in claim 15, wherein said skeleton structure is a cloth made of alumina silica long fiber containing at least 80 wt % of a mullite component.

**17.** A material lined member surface as claimed in claim 15 or claim 16, wherein said aluminium salt is selected from one or more of aluminium phosphate, basic aluminium lactate, basic aluminum chloride and basic aluminium acetate.

**18.** A material lined member surface as claimed in any one of claims 15 to 18, wherein a member treating molten aluminium bath is constitution to be heated.

**19.** A material lined member surface for a molten aluminium bath, wherein said material comprises or consists of a ceramic composite as defined in any one of claims 1 to 8, and wherein said reinforcement material comprises a continuous fiber made of a metal oxide, said matrix comprises a filler and a binder as a main component made of a metal oxide powder, and at least 90 wt % of said matrix constituting material is occupied.

**20.** A material lined member surface as claimed in claim 19, wherein said continuos fiber is a crystalline continuos long fiber or an amorphous fiber selected from mulliteous, aluminous, alumina siliceous and siliceous, and said metal oxide powder is selected from one or more of mullite powder, alumina powder and silica powder.

**21.** A material lined member surface as claimed in claim 19 or claim 20, wherein an aluminium salt is used as the binder.

**22.** A material lined member surface as claimed in any one of claims 19 to 21, further including one or more components in the range of from 10 wt % or less and selected from boron nitride, barium sulphate, aluminium borate and hydrous silica clay.
